# EUROPÄISCHE PATENTSCHRIFT

(11) **EP 1 002 465 B1**
(45) Veröffentlichungstag und Bekanntmachung des Hinweises auf die Patenterteilung: **16.08.2001**
(21) Anmeldenummer: 98122032.0
(22) Anmeldetag: 20.11.1998
(51) Int. Cl.: A23G 3/00, A23L 1/072

(54) **Verfahren zur Herstellung von Fruchtgummikonfekt**
Method for the production of fruit jelly confectionery
Procédé pour la fabrication d'une confiserie à pâte de fruit

(43) Veröffentlichungstag der Anmeldung: 24.05.2000
(73) Patentinhaber: Katjes Fassin GmbH + Co. KG, 46446 Emmerich (DE)
(72) Erfinder: Fassin, Klaus, 46446 Emmerich (DE); Bachmüller, Tobias, 40629 Düsseldorf (DE)
(74) Vertreter: Albrecht, Rainer Harald, Dr.-Ing.

(56) Entgegenhaltungen:
- EP-A- 0 788 746
- US-A- 3 947 604
- US-A- 4 388 337
- US-A- 5 626 896
- POPPE J: "New approaches to gelling agents in confectionbery" THE MANUFACTURING CONFECTIONER, Bd. 75, Nr. 5, 1995, Seiten 119-126, XP002100732
- DATABASE FSTA INTERNATIONAL FOOD INFORMATION SERVICE (IFIS), FRANFURT/MAIN, DE 83-1-12-10857, 1983 ZHARYLGAPOV S: "Increasing the biological value of confectionery products" XP002100733
- DATABASE WPI Section Ch, Week 8517 Derwent Publications Ltd., London, GB; Class D13, AN 85-103815 XP002100734 & SU 1 117 039 A (AS GEOR PLANT BIOCHEM IN), 7. Oktober 1984
- PATENT ABSTRACTS OF JAPAN vol. 004, no. 065 (C-010), 16. Mai 1980 & JP 55 034079 A (KASUGAI SEIKA KK), 10. März 1980
- PATENT ABSTRACTS OF JAPAN vol. 010, no. 219 (C-363), 31. Juli 1986 & JP 61 058546 A (FUJI OIL CO LTD), 25. März 1986

## Beschreibung

Die Erfindung betrifft ein Verfahren zur Herstellung von Fruchtgummikonfekt, bei dem eine durch Erhitzen zubereitete Fruchtgummimasse aus im wesentlichen Süßungsmittel, Wasser, Geliermittel, Säure, Frucht- und Pflanzenauszügen und Aromen in Formen gegossen wird und durch Abkühlen erstarrte Fruchtgummikörper anschließend ausgeformt werden. - Unter Fruchtgummikonfekt werden im Rahmen der Erfindung Zuckerwaren in der Gestalt transparenter Formkörper mit etwas zäher, gummiartiger Beschaffenheit verstanden. Die Fruchtgummikörper werden in vielfältigen, zumeist kindgerechten Formen, z. B. als Tierfiguren, angeboten und werden in größeren Stückzahlen in Beuteln abgepackt. Als Süßungsmittel werden Zucker und Gluckosesirup oder als Zuckeraustauschstoffe Fruchtzucker und Zuckeralkohole verwendet. Das Geliermittel besteht im Rahmen der bekannten Maßnahmen aus Gelatine, welches den Fruchtgummikörpern die charakteristischen Eigenschaften, nämlich Transparenz und gummiartige Konsistenz, verleiht und typischerweise in einer Menge von etwa 7 Gew.-%, bezogen auf die Trockensubstanz der Fruchtgummimasse, eingesetzt wird.

Das bekannte, Gelatine enthaltende Fruchtgummikonfekt ist bei höheren Temperaturen nicht lagerstabil. Bei Temperaturen oberhalb 35° C werden die Fruchtgummikörper weich und klebrig und neigt das Fruchtgummikonfekt innerhalb der Verpackung zur Verklumpung. Insbesondere in südlichen Ländern mit hohen Durchschnittstemperaturen und intensiver Sonneneinstrahlung ist die Verbreitung von Fruchtgummikonfekt daher eingeschränkt.

Der Erfindung liegt die Aufgabe zugrunde, Fruchtgummikonfekt aus transparenten, etwas zähen und gummiartigen Fruchtgummikörpern herzustellen, welches noch bei Temperaturen bis annähernd 50° C lagerstabil ist und nicht zur Verklebung neigt.

Ausgehend von dem eingangs beschriebenen Verfahren lehrt die Erfindung zur Lösung dieser Aufgabe, daß als Geliermittel eine Mischung aus Pektin und modifizierter Stärke verwendet wird und daß die ausgeformten Fruchtgummikörper bei einer Trocknungstemperatur oberhalb 40° C getrocknet werden. Nach der Trocknung liegen transparente, nicht klebende und formstabile Fruchtgummikörper vor, deren sensorische Eigenschaften sich auch bei einer Dauertemperatur zwischen 35 und 48° C nicht wesentlich verändern.

Modifizierte Stärke umfaßt Stärkederivate, die durch chemisch/physikalische Veränderungen bei weitgehender Erhaltung der Korn- oder Molekülstruktur entstehen. Modifizierte Stärken werden in der Lebensmitteltechnologie z. B. als Bindemittel bei Feinkost- und Fertiggerichtkonserven eingesetzt (vgl. ULLMANNS Enzyklopädie der technischen Chemie, Band 22, 4. Auflage, Seiten 191 bis 200). Im Rahmen der erfindungsgemäßen Lehre verleiht die modifizierte Stärke dem Produkt in Kombination mit der nachfolgenden Trocknung Transparenz und große Formstabilität. Die modifizierte Stärke wird in einer Menge von mindestens 7 Gew.-%, bezogen auf die Trockensubstanz der Fruchtgummimasse, verwendet. Vorzugsweise wird mit einer Menge von 10 bis 20 Gew.-% gearbeitet.

Das erfindungsgemäß in Kombination mit modifizierter Stärke verwendete Pektin verleiht dem Fruchtgummikörper die für solche Produkte charakteristische gummiartige Konsistenz und trägt wesentlich dazu bei, daß die Produkte beim Verzehr nicht an den Zähnen kleben. Pektin sollte in einer Menge von mindestens 0,3 Gew.-%, bezogen auf die Trockensubstanz der Fruchtgummimasse, eingesetzt werden. Vorzugsweise enthält die Fruchtgummimasse 0,5 bis 3 Gew.-% Pektin, wiederum bezogen auf die Trockensubstanz der Fruchtgummimasse. Für die Gelbildung des Pektins ist neben einer ausreichenden Menge an Zucker oder Zuckeraustauschstoffen erforderlich, daß der pH-Wert der Fruchtgummimasse durch Zusatz von Säure abgesenkt wird. Die der Fruchtgummimasse zugesetzte Menge an Säure wird entsprechend bemessen.

Als Süßungsmittel wird vorzugsweise eine Mischung aus Kristallzucker und Glukosesirup verwendet.

Mit der im Rahmen der erfindungsgemäßen Lehre durchgeführten Trocknung bei einer Trocknungstemperatur oberhalb 40° C stellen sich die für Fruchtgummikonfekt charakteristischen sensorischen Eigenschaften ein, werden also formstabile, gummiartige, transparente und nicht klebende Produkte gebildet. Die Trocknung sollte in einem klimatisierten Raum über einen Zeitraum von mindestens 24 Stunden durchgeführt werden. Vorzugsweise beträgt die Trocknungszeit zwischen 48 und 96 Stunden. Gemäß einer bevorzugten Ausführung der Erfindung wird mit einer Trocknungstemperatur von 45 bis 50° C gearbeitet.

### Ausführungsbeispiel

Das Ausführungsbeispiel bezieht sich auf die Herstellung von Fruchtgummikonfekt aus Fruchtgummikörpern mit der folgenden Zusammensetzung:
1 Tasse Glukosesirup,
1 Tasse Kristallzucker,
3 Eßlöffel modifizierte Stärke,
1 Teelöffel Pektin,
1½ Teelöffel Zitronensäure.

Die Ausgangsstoffe Glukosesirup, Zucker, modifizierte Stärke und Pektin werden unter Zugabe von Wasser gekocht. Anschließend werden Zitronensäure und nach Bedarf Aromen sowie färbende Frucht- und Pflanzenauszüge zugegeben und gemischt. Die heiße Masse wird in mit Puderstärke gefüllte und geprägte Puderkästen gegossen. Die Fruchtgummimasse erstarrt durch Abkühlung, wobei Fruchtgummikörper entstehen. Die erstarrten Fruchtgummikörper werden ausgeformt und in einem klimatisierten Raum bei einer Trocknungstemperatur zwischen 45 und 55° C über einen Trocknungszeitraum von 48 bis 96 Stunden getrocknet. Anschließend werden die Fruchtgummikörper von anhaftender Puderstärke befreit, mit einem dünnen Film eines Trennmittels umgeben und verpackt.

## Patentansprüche

1. Verfahren zur Herstellung von Fruchtgummikonfekt, bei dem eine durch Erhitzen zubereitete Fruchtgummimasse aus im wesentlichen Süßungsmittel, Wasser, Geliermittel, Säure, Frucht- und Pflanzenauszügen und Aromen in Form gegossen wird und durch Abkühlen erstarrte Fruchtgummikörper anschließend ausgeformt werden,
wobei als Geliermittel eine Mischung aus Pektin und modifizierter Stärke verwendet wird und wobei die modifizierte Stärke in einer Menge von 7 bis 20 Gew.-% bezogen auf die Trockensubstanz der Fruchtgummimasse eingesetzt wird
und wobei die ausgeformten Fruchtgummikörper bei einer Trocknungstemperatur oberhalb 40° C getrocknet werden.

2. Verfahren nach Anspruch 1, wobei die modifizierte Stärke in einer Menge von mindestens 7 Gew.-%, vorzugsweise in einer Menge von 10 bis 20 Gew.-%, bezogen auf die Trockensubstanz der Fruchtgummimasse eingesetzt wird.

3. Verfahren nach Anspruch 1 oder 2, wobei Pektin in einer Menge von mindestens 0,3 Gew.-%, vorzugsweise in einer Menge von 0,5 bis 3 Gew.-%, bezogen auf die Trockensubstanz der Fruchtgummimasse, eingesetzt wird.

4. Verfahren nach einem der Ansprüche 1 bis 3, wobei als Süßungsmittel eine Mischung aus Kristallzucker und Glukosesirup verwendet wird.

5. Verfahren nach einem der Ansprüche 1 bis 4, wobei die Trocknung in einem klimatisierten Raum über einen Zeitraum von mindestens 24 Stunden, vorzugsweise über einen Zeitraum von 48 bis 96 Stunden, durchgeführt wird.

6. Verfahren nach einem der Ansprüche 1 bis 5, wobei die Trocknungstemperatur 45 bis 55° C beträgt.

## Claims

1. A method for the manufacture of winegum confectionery, in which a winegum mixture consisting mainly of sweetening agents, water, gelling agent, acid, fruit and plant extracts and flavouring is prepared by heating, is then poured into moulds and the winegum shapes are then formed by cooling,
in which the gelling agent consists of a mixture of pectin and modified starch and in which the used modified starch represents 7 to 20 weight % of the dry substance of the winegum mixture
and in which the formed winegum shapes are dried at a drying temperature of over 40°C.

2. A method according to claim 1, in which the used modified starch represents at least 7 weight % and preferably 10 to 20 weight % of the dry substance of the winegum mixture.

3. A method according to claim 1 or 2, in which the used pectin represents 0.3 weight % and preferably 0.5 to 3 weight % of the dry substance of the winegum mixture.

4. A method according to claims 1 to 3, in which a mixture of crystal sugar and glucose syrup is used as sweetening agent.

5. A method according to claims 1 to 4, in which the drying process takes place in an air-conditioned room for at least 24 hours and preferably for 48 to 96 hours.

6. A method according to claims 1 to 5, in which the drying temperature lies between 45 and 55°C.

## Revendications

1. Procédé de fabrication de confiserie en gomme fruitée, dans lequel on coule dans un moule une masse de gomme fruitée préparée par chauffage pour l'essentiel à partir d'édulcorant, d'eau, de gélifiant, d'acide, d'extraits de fruits et de plantes, et d'arômes et on démoule ensuite des corps en gomme fruitée solidifiés par refroidissement,
dans lequel on utilise un mélange de pectine et d'amidon modifié comme gélifiant, et l'amidon modifié est mis en oeuvre dans une proportion de 7 à 20 % en poids par rapport à la matière sèche de la masse de gomme fruitée
et dans lequel on sèche les corps en gomme fruitée démoulés à une température de séchage supérieure à 40 °C.

2. Procédé selon la revendication 1, dans lequel l'amidon modifié est mis en oeuvre dans une proportion d'au moins 7 % en poids, de préférence dans une proportion de 10 à 20 % en poids, par rapport à la matière sèche de la masse de gomme fruitée.

3. Procédé selon la revendication 1 ou 2, dans lequel de la pectine est mise en oeuvre dans une proportion d'au moins 0,3 % en poids, de préférence dans une proportion de 0,5 à 3 % en poids, par rapport à la matière sèche de la masse de gomme fruitée.

4. Procédé selon l'une des revendications 1 à 3, dans lequel on utilise comme édulcorant un mélange de sucre cristallisé et de sirop de glucose.

5. Procédé selon l'une des revendications 1 à 4, dans lequel on réalise le séchage dans un espace climatisé pendant une durée d'au moins 24 heures, de préférence pendant une durée de 48 à 96 heures.

6. Procédé selon l'une des revendications 1 à 5, dans lequel la température de séchage est de 45 à 55°.
